# EUROPÄISCHE PATENTANMELDUNG

(11) **EP 3 896 629 A1**
(43) Veröffentlichungstag der Anmeldung: **20.10.2021**
(21) Anmeldenummer: 20169616.8
(22) Anmeldetag: 15.04.2020
(51) Int. Cl.: G06Q 10/08, G06Q 30/06

(54) **VERFOLGUNG VON PFLANZLICHEN UND/ODER TIERISCHEN ERZEUGNISSEN**

(71) Anmelder: Bayer Aktiengesellschaft, 51373 Leverkusen (DE)
(72) Erfinder: SCHÄFER, Dirk, 50171 Kerpen (DE)
(74) Vertreter: BIP Patents

(57) **Zusammenfassung**

Die vorliegende Erfindung befasst sich mit der Verfolgung von pflanzlichen und/oder tierischen Erzeugnissen. Gegenstände der vorliegenden Erfindung sind ein Verfahren, ein System und ein Computerprogrammprodukt zur Bereitstellung von Informationen zu individuellen Erzeugniseinheiten.

## Beschreibung

Die vorliegende Erfindung befasst sich mit der Verfolgung von pflanzlichen und/oder tierischen Erzeugnissen. Gegenstände der vorliegenden Erfindung sind ein Verfahren, ein System und ein Computerprogrammprodukt zur Bereitstellung von Informationen zu individuellen Erzeugniseinheiten.

Die Verfolgung von Gütern und Waren spielt in vielen Bereichen der Wirtschaft eine wichtige Rolle. Waren und Güter bzw. deren Verpackungen und/oder Behälter werden mit einer eindeutigen Kennung (z.B. einer Seriennummer) versehen (Serialisierung), um sie entlang ihrer Lieferkette verfolgen und Wareneingänge und -ausgänge maschinell erfassen zu können.

In vielen Fällen ist die Kennung in einer maschinenlesbaren Form, z.B. in Form eines Strichcodes oder eines Matrixcodes (2D-Code) auf den Waren und Gütern bzw. deren Verpackungen und/oder Behälters aufgebracht. Hinter dem Strich- oder Matrixcode verbirgt sich oft eine Seriennummer, die üblicherweise Auskunft über Art der Ware oder des Gutes und über die Herkunft liefert.

Bei manchen pharmazeutischen Produkten ist sogar eine individuelle Kennzeichnung von Einzelpackungen erforderlich. Gemäß Art. 54a Abs. 1 der durch die sog. EU-Fälschungsschutzrichtlinie 2011/62/EU (FMD) geänderten Richtlinie 2001/83/EG sind zumindest verschreibungspflichtige Arzneimittel mit einem individuellen Erkennungsmerkmal (engl.: *Unique Identifier*) zu kennzeichnen, das insbesondere eine Überprüfung der Echtheit und die Identifizierung von Einzelpackungen ermöglicht.

Pflanzliche und tierische Erzeugnisse werden üblicherweise lediglich mit einem Seriencode versehen; eine individuelle Kennzeichnung von einzelnen Erzeugnissen ist nicht bekannt.

Bei pflanzlichen und tierischen Erzeugnissen wird eine Kennzeichnung üblicherweise auf eine Verpackung und/oder einen Behälter zum Beispiel in Form von Aufklebern, Gravuren oder Aufdrucken aufgebracht.

In manchen Fällen werden Kennungen auch direkt auf pflanzliche oder tierische Produkte aufgebracht. Eier werden beispielsweise in der Europäischen Union mit einem Erzeugercode versehen, aus dem die Haltungsform des Huhns, das Land, aus dem das Ei stammt, und der Betrieb aus dem das Ei stammt, abgeleitet werden kann. Der Erzeugercode ist nicht zum maschinellen Auslesen gedacht und ist nicht individuell für einzelne Eier vergeben. Zunehmend werden auch die Schale von Obst- und Gemüseeinheiten mit einer Kennzeichnung versehen (siehe z.B.: E. Etxeberria et al: Anatomical and Morphological Characteristics of Laser Etching Depressions for Fruit Labeling, 2006, HortTechnology. 16, 10.21273/HORTTECH.16.3.0527).

Verbraucher zeigen ein zunehmendes Interesse an der Herkunft und der Lieferkette von pflanzlichen und tierischen Erzeugnissen. Sie wollen beispielsweise wissen, woher das jeweilige Erzeugnis stammt, ob und wie es behandelt wurde (z.B. mit Pflanzenschutzmitteln), wie lange der Transport gedauert hat, welche Bedingungen während des Transports geherrscht haben und/oder dergleichen. Es wäre wünschenswert, wenn ein Verbraucher solche Informationen schnell und einfach erhalten könnte. Es besteht damit die Aufgabe, Mittel bereitzustellen, die es einem Verbraucher ermöglichen, detaillierte Information zu pflanzlichen und/oder tierischen Erzeugnissen zu erhalten.

Diese Aufgabe wird durch die Gegenstände der unabhängigen Patentansprüche gelöst. Bevorzugte Ausführungsformen finden sich in den abhängigen Patentansprüchen, der vorliegenden Beschreibung und in den Zeichnungen.

Ein erster Gegenstand der vorliegenden Erfindung ist ein System umfassend
- eine Kontrolleinheit, wobei die Kontrolleinheit konfiguriert ist, für eine Vielzahl an pflanzlichen und/oder tierischen Erzeugniseinheiten jeweils eine individuelle Kennung zu erzeugen,
- eine Beschriftungseinheit, wobei die Beschriftungseinheit konfiguriert ist, pflanzliche und/oder tierische Erzeugniseinheiten mit jeweils einer individuellen Kennung zu versehen, wobei die individuellen Kennungen in Form von maschinell lesbaren Codes auf die Erzeugniseinheiten aufgebracht werden,
- einen Server, wobei der Server konfiguriert ist, von einer Vielzahl an Verbrauchern individuelle Kennungen zu empfangen, anhand der individuellen Kennungen Informationen zu den jeweiligen Erzeugniseinheiten aus einer Datenbank zu extrahieren und die Informationen an die Verbraucher zu übermitteln.

Ein weiterer Gegenstand der vorliegenden Erfindung ist ein Verfahren umfassend die Schritte
- Versehen einer pflanzlichen oder tierischen Erzeugniseinheit mit einer individuellen Kennung, wobei die individuelle Kennung in Form eines maschinell lesbaren Codes auf die Erzeugniseinheit aufgebracht wird,
- Sammeln von Informationen zu der Erzeugniseinheit und Speichern der Informationen in einer Datenbank unter der individuellen Kennung
- Empfangen der individuellen Kennung durch einen Verbraucher
- Extrahieren von Informationen zu der Erzeugniseinheit aus der Datenbank anhand der empfangenen individuellen Kennung
- Übermitteln der extrahierten Informationen an den Verbraucher.

Ein weiterer Gegenstand der vorliegenden Erfindung ist ein Computerprogrammprodukt umfassend einen Datenträger, auf dem ein Computerprogramm gespeichert ist, wobei das Computerprogramm in einen Arbeitsspeicher eines Computers geladen werden kann und dort den Computer dazu veranlasst, folgende Schritte ausführen:
- Erzeugen einer eindeutigen Kennung für eine pflanzliche oder tierische Erzeugniseinheit
- Empfangen von Informationen zu der Erzeugniseinheit und Speichern der Informationen in einer Datenbank unter der individuellen Kennung
- Empfangen der individuellen Kennung durch einen Verbraucher
- Extrahieren von Informationen zu der Erzeugniseinheit aus der Datenbank anhand der empfangenen individuellen Kennung
- Übermitteln der extrahierten Informationen an den Verbraucher.

Die Erfindung wird nachstehend näher erläutert, ohne zwischen den Erfindungsgegenständen (System, Verfahren, Computerprogrammprodukt) zu unterscheiden. Die nachfolgenden Erläuterungen sollen vielmehr für alle Erfindungsgegenstände in analoger Weise gelten, unabhängig davon, in welchem Kontext (System, Verfahren, Computerprogrammprodukt) sie erfolgen.

Die vorliegende Erfindung erlaubt einem Verbraucher, Informationen über eine individuelle pflanzliche oder tierische Erzeugniseinheit zu gewinnen.

Unter dem Begriff "Verbraucher" wird eine natürliche Person verstanden, die eine Erzeugniseinheit käuflich erworben hat oder zumindest erwägt, eine Erzeugniseinheit käuflich zu erwerben, oder die ein sonstiges Interesse an einer Erzeugniseinheit hat.

Unter dem Begriff "Erzeugniseinheit" wird ein einzelnes Erzeugnis verstanden, das in Form einer individuellen Einheit auf den Markt gebracht wird. Dabei kann es sich um die kleinste Einheit eines pflanzlichen Erzeugnisses handeln, die zum Kauf angeboten wird. Üblicherweise handelt es sich um eine Einheit, die in der zum Kauf angebotenen Form geerntet wird. Üblicherweise handelt es sich um eine Frucht oder eine Einzelpflanze oder einen Teil einer Einzelpflanze (wie beispielsweise eine Knolle, eine Wurzel, eine Zwiebel und/oder dergleichen). Eine Erzeugniseinheit kann beispielsweise ein Apfel, eine Birne, eine Zitrone, eine Orange, eine Mandarine, eine Limone, eine Grapefruit, eine Kiwi, eine Banane, ein Pfirsich, eine Pflaume, eine Mirabelle, eine Tomate, ein Kohl (ein Blumenkohl, ein Weißkohl, ein Grünkohl oder dergleichen), eine Gurke, eine Paprika, eine Zucchini, eine Kartoffel, eine Süßkartoffel, eine Lauchstange, ein Kohlrabi, ein Rettich, eine Mohrrübe, eine Melone, ein Kürbis, eine Kokosnuss, ein Ei, ein Fisch und/oder dergleichen sein. Bei Erzeugnissen, die in Form von Ansammlungen (Trauben) anfallen wie beispielsweise Weintrauben, kann eine Erzeugniseinheit auch eine solche Ansammlung sein. Bei Erzeugnissen, die üblicherweise zerteilt und in Einzelteilen vertrieben werden, kann eine Erzeugniseinheit auch ein Bestandteil eines Erzeugnisses sein, wie beispielsweise ein Steak.

Bei den erfindungsgemäßen Erzeugniseinheiten handelt es sich um pflanzliche oder tierische Erzeugniseinheiten, vorzugsweise um Früchte und/oder um Gemüse.

Erfindungsgemäß werden Erzeugniseinheiten jeweils mit einer individuellen Kennung versehen. Jede Erzeugniseinheit trägt damit eine individuelle Kennung, die sie von jeder anderen Erzeugniseinheit unterscheidet. Anhand der individuellen Kennung lässt sich die Erzeugniseinheit daher eindeutig identifizieren (und von anderen unterscheiden).

Die eindeutige Kennung kann eine Nummer oder ein alphanumerischer Code oder ein Binärcode oder ein Hexadezimalcode oder dergleichen sein. Die eindeutige Kennung ist in Form eines maschinell lesbaren Codes auf der Erzeugniseinheit aufgebracht.

Der Begriff "maschinell lesbar" bedeutet, dass der Code von einer Maschine erfasst und interpretiert werden kann. Beispiele für maschinell lesbare Codes sind Barcodes (Strichcodes) und Matrixcodes (wie z.B. QR-Code oder Data Matrix Code). Als Maschine zum Erfassen und Interpretieren eines solchen Codes kann beispielsweise ein Barcode-Scanner und/oder eine Kamera verwendet werden. Auch mittels OCR (*optical character recognition*) lesbare Buchstaben, Zahlen und Satzzeichen sind maschinell lesbare Codes, die beispielsweise mittels einer Kamera erfasst werden können.

Auch die auf Magnetstreifenkarten gespeicherten Informationen oder in Halbleiterspeichern von RFID-Tags (RFID: *radio-frequency identification*) oder NFC-Chips (NFC: *near field communication*) gespeicherten Informationen sind maschinell lesbare Codes. Zum Auslesen dieser Codes kommen üblicherweise spezielle Auslesegeräte für Magnetstreifen bzw. für Transponder zum Einsatz.

In einer bevorzugten Ausführungsform ist die individuelle Kennung in Form eines optisch lesbaren Codes aufgebracht, besonders bevorzugt in Form eines Matrixcodes oder eines ähnlichen Codes. Optisch lesbare Codes haben den Vorteil, dass sie von vielen Verbrauchern mit einfachen Mitteln ausgelesen werden können. So verfügen viele Verbraucher beispielsweise über ein Smartphone, das mit einer oder mehreren Kameras ausgestattet ist. Mittels einer solchen Kamera kann eine Abbildung des optisch lesbaren Codes auf dem Kamerasensor (beispielsweise auf einem CMOS- oder CCD-Sensor) erzeugt werden. Die Abbildung kann digitalisiert und von einem Softwareprogramm, das auf dem Smartphone gespeichert ist, analysiert werden. Eine solche Software ist konfiguriert, den optisch lesbaren Code zu identifizieren und zu interpretieren, d.h. in eine andere Form zu übersetzen wie beispielsweise eine Zahlenfolge, eine Folge von Buchstaben und/oder dergleichen, je nachdem, welche Information in Form des optisch lesbaren Codes auf die Erzeugniseinheit aufgebracht worden ist.

Der optisch lesbare Code kann auf die Erzeugniseinheit aufgedruckt, eingraviert, eingeätzt, eingebrannt, eingeprägt und/oder auf sonstige Weise auf die Erzeugniseinheit aufgebracht oder in die Erzeugniseinheit eingebracht und/oder an die Erzeugniseinheit angebracht werden. Vorzugsweise wird der optisch lesbare Code mittels eines Lasers in die Oberfläche der Erzeugniseinheit (zum Beispiel die Schale bei einem Obst oder einem Gemüse) eingebracht. Dabei kann der Laser Farbstoffmoleküle in der Oberfläche der Erzeugniseinheit verändern (z.B. ausbleichen oder zerstören), so dass ein Kontrast zum umliegenden Gewebe entsteht. Es ist auch denkbar, dass die Erzeugniseinheit oder ein Teil der Erzeugniseinheit mit einer speziellen Schicht versehen ist, in die oder auf die mittels eines Lasers oder auf sonstige Weise ein maschinell lesbarer Code eingebracht oder aufgebracht werden kann. Details zur Kennzeichnung von pflanzlichen oder tierischen Erzeugnissen sind dem Stand der Technik zu entnehmen (siehe zum Beispiel WO2007130968, US5660747, EP1737306, US10481589, US20080124433). Auch optisch lesbare Codes, die üblicherweise nur auf Printmedien aufgebracht sind (siehe z.B.: US2010/0006657, US2005/0082360, US8763905, DE202016107477U1) können für die individuelle Kennzeichnung von Erzeugniseinheiten verwendet werden.

Weitere Möglichkeiten der Kennzeichnung von Erzeugnissen sind z.B. in den folgenden Veröffentlichungen zu finden: WO2018183768, WO2014112874, WO2014063157, WO2011163296, EP3031736, CA3023359).

Bevor eine Erzeugniseinheit mit einer individuellen Kennung versehen werden kann, muss eine solche individuelle Kennung zunächst erzeugt werden. Dabei können individuelle Kennungen von einer (unabhängigen) Organisation erzeugt und an die Hersteller und/oder Vertreiber und/oder Lieferanten und/oder Verkäufer von pflanzlichen und/oder tierischen Erzeugnissen verteilt werden. Eine solche Organisation ist beispielsweise GS1, ein Netzwerk von Not-for-Profit-Organisationen, die weltweit Standards für unternehmensübergreifende Prozesse entwickeln, aushandeln und pflegen. Im Einzelhandel ist das GS1-System führend, es kommt aber auch in anderen Branchen zum Einsatz. Bekannt ist beispielsweise die *Global Trade Item Number* (GTIN) im EAN-Strichcode (EAN: *European Article Number*), der auf allen Einzelhandelsprodukten zu finden ist und gescannt werden kann, um Kassiervorgänge und weitere Abläufe zu automatisieren. Im Bereich der Medizinprodukte ist GS 1 eine von der Europäischen Kommission und der FDA (U. S. *Food and Drug Administration*) benannte Vergabestelle für die Produktidentifizierungsnummer (*Unique Device Identification*)*.* Denkbar ist aber auch, dass Hersteller und/oder Vertreiber und/oder Lieferanten und/oder Verkäufer von pflanzlichen und/oder tierischen Erzeugnissen ihre jeweiligen individuellen Kennungen (ggf. in einer mit anderen Parteien abgestimmten Weise) selbst erzeugen und verwalten.

Eine individuelle Kennung hat üblicherweise eine begrenzte Laufzeit. Wird zum Beispiel eine individuelle Kennung für eine Frucht wie für einen Apfel erzeugt und auf den Apfel aufgebracht, dann kann davon ausgegangen werden, dass der Apfel nach einer gewissen Zeit nicht mehr für den menschlichen Verzehr geeignet ist und die individuelle Kennung dann wieder frei wird, das heißt für eine andere Erzeugniseinheit vergeben werden kann. Individuelle Kennungen werden daher vorzugsweise mit einer Laufzeit versehen, die angibt, wie lange die individuelle Kennung genutzt werden kann, bevor sie einer anderen Erzeugniseinheit zugeordnet wird. Diese Laufzeit beträgt beispielsweise 6 Monate oder 9 Monate oder 12 Monate oder 18 Monate oder einen anderen Zeitraum. Vorzugsweise beginnt die Laufzeit mit der Zuordnung der Kennung zu einer Erzeugniseinheit. Es ist auch denkbar, dass mit dem Verkauf der Erzeugniseinheit an einen Endkunden (Verbraucher) eine Frist in Gang gesetzt wird, an deren Ende die individuelle Kennung wieder für den Zuordnung zu einer neuen Erzeugniseinheit verwendet werden kann. Diese Frist kann beispielsweise 2 Wochen oder einen Monat oder 3 Monate oder 6 Monate oder einen anderen Zeitraum betragen.

Vorzugsweise werden Erzeugniseinheiten vor, während oder unmittelbar nach ihrer Ernte mit ihrer individuellen Kennung versehen. Mit dem Auf-, An- oder Einbringen einer individuellen Kennung wird eine Erzeugniseinheit als eine Einheit kenntlich, verfolgbar und identifizierbar gemacht. Das Auf-, An- oder Einbringen sollte daher zu einem möglichst frühen Zeitpunkt in der Lieferkette erfolgen; vorzugsweise zu einem Zeitpunkt, bei dem die Erzeugniseinheit (ohnehin) prozessiert wird. Dies ist insbesondere während der Ernte der Fall. In einer bevorzugten Ausführungsform werden daher Erzeugniseinheiten zum Zeitpunkt ihrer Ernte mit einer individuellen Kennung versehen.

Der Begriff "Lieferkette" kann mit dem Begriff "Existenzzeitspanne" gleichgesetzt werden. Eine Erzeugniseinheit im Sinne der vorliegenden Erfindung ist vorzugsweise ein Verbrauchsgut, das zum Verbrauch durch einen Menschen und/oder ein Tier bestimmt ist. Es wird üblicherweise auf natürlichem Weg gewonnen und verbraucht, d.h. irreversibel verändert, so dass es nicht ein zweites Mal bestimmungsgemäß verwendet werden kann. Der Beginn der Existenzzeitspanne kann das Einpflanzen von Saatgut, aus dem die Erzeugniseinheit hervorgeht, sein; es kann aber auch der Zeitpunkt der Ernte sein, zu dem die Erzeugniseinheit (erstmalig) von anderen Erzeugniseinheiten separiert wird. Auch andere Zeitpunkte zwischen der Aussaat und der Ernte oder auch nach der Ernte können den Start der Existenzzeitspanne definieren. Aus Sicht der Erfindung beginnt die Existenz einer Erzeugniseinheit mit dem Zeitpunkt, zu dem erstmals Informationen über die Erzeugniseinheit vorliegen. Dabei können diese Informationen auch erst zu einem späteren Zeitpunkt der jeweiligen Erzeugniseinheit zugeordnet werden. Es ist beispielsweise denkbar, dass der Aussaattermin für eine Pflanze erfasst wird und diese Information erst bei dem Auf-, An- oder Einbringen der individuellen Kennung auf/an/in die Erzeugniseinheit mit der Erzeugniseinheit verknüpft wird (d.h. als (weitere) Information in der Datenbank unter der individuellen Kennung abgelegt wird). Das Ende der Existenzzeitspanne ist üblicherweise der Verbrauch durch einen Verbraucher oder eine Vernichtung, z.B. weil die Erzeugniseinheit Qualitätseinbußen erlitten hat und nicht mehr zum bestimmungsgemäßen Verbrauch geeignet ist. Zwischen dem Start und dem Ende der Existenzzeitspanne durchläuft eine Erzeugniseinheit verschiedene Stationen und Prozesse wie beispielsweise Ernte, Waschung, Behandlung, Verpackung, Verlagerung, Abfüllung, Transport, Umladung, Umverpackung, Umfüllung, Lagerung und/der dergleichen. Zu allen Prozessen und/oder Stationen, an denen die Prozesse ablaufen, können Informationen erfasst und in der Datenbank gespeichert werden.

Für jede mit einer individuellen Kennung versehene Erzeugniseinheit existiert eine virtuelle Kopie, das heißt mindestens ein Eintrag in einer Datenbank. Der mindestens eine Eintrag umfasst die individuelle Kennung, d.h. über die individuelle Kennung sind Informationen aus der Datenbank zu der jeweiligen Erzeugniseinheit abrufbar und es können unter der individuellen Kennung weitere Informationen zu der jeweiligen Erzeugniseinheit in der Datenbank abgelegt (gespeichert) werden. Auch wenn in dieser Beschreibung von "der Datenbank" oder "einer Datenbank" die Rede ist, ist für den Fachmann klar, dass auch mehrere Datenbanken vorhanden sein können, z.B. für verschiedene Gruppen von Erzeugniseinheiten und/oder verschiedene Informationen, die zu den Erzeugniseinheiten gesammelt werden. Vorzugsweise handelt es sich bei der Datenbank (ggf. den Datenbanken) um einen Cloud-Speicher, der über ein oder mehrere Netzwerke (inkl. Mobilfunknetze) von vielen Punkten der Erde aus erreichbar ist.

Folgende Informationen können beispielsweise in der Datenbank zu einer Erzeugniseinheit gespeichert sein:
- Art der Erzeugniseinheit (z.B. in Form der Bezeichnung der Pflanze oder des Tieres, von dem sie stammt, Sorte und/oder dergleichen)
- Herkunft (z.B. in Form des Namens des Landes, der Region und/oder des Betriebs, von dem/der sie stammt)
- Ernte- oder Schlachtdatum
- Datum der Aussaat,
- Informationen zur Erzeugung (z.B. Art des Anbaus bei Pflanzen (z.B. biologisch, konventionell, bio-dynamisch, Anbau gemäß einer zertifizierten Anbaumethode und/oder dergleichen), oder Art der Haltung bei Tieren (z.B. Freilandhaltung, Käfighaltung, Aquakultur und/oder dergleichen))
- Informationen zur Verwendung von Pflanzenschutzmitteln (Art des Pflanzenschutzmittels, Datum der (letzten) Applikation, Restmengen an Pflanzenschutzmittel in/an/auf der Erzeugniseinheit)
- Gewicht und/oder Größe (zum Beispiel zum Zeitpunkt der Ernte)
- Zeitspannen, in denen die Erzeugniseinheit gelagert und/oder transportiert worden ist
- Bedingungen, unter denen die Erzeugniseinheit gelagert und/oder transportiert worden ist (z.B. Temperatur, Feuchte, Lichtintensität und/oder dergleichen)
- Stationen in der Lieferkette
- Mindesthaltbarkeit
- Informationen zur Lagerung und/oder zur Zubereitung und/oder zum sonstigen Gebrauch durch den Verbraucher.

Vorzugsweise existieren an einigen oder an allen Stationen der Lieferkette der Erzeugniseinheit Erfassungsgeräte für die individuelle Kennung. Mit einem solchen Erfassungsgerät kann die individuelle Kennung einer Erzeugniseinheit erfasst (gelesen) werden. Es können nun an der jeweiligen Station anhand der individuellen Kennung Informationen zu der Erzeugniseinheit aus der Datenbank abgerufen und/oder Informationen zu der Erzeugniseinheit in der Datenbank gespeichert werden. So kann beispielsweise der Zeitpunkt des Ein- und/oder Ausgangs einer Erzeugniseinheit an/von einer Station in der Datenbank gespeichert werden. Es können Informationen zu Prozessen, die an einer Station an oder mit der Erzeugniseinheit ausgeführt werden, in der Datenbank gespeichert werden. Es können auch eine oder mehrere Änderungen, die sich für eine Erzeugniseinheit ergeben haben, gespeichert werden.

Es ist denkbar, dass einige Informationen zu den Erzeugniseinheiten nicht an einer Station der Lieferkette anfallen, sondern z.B. auf einem Weg von einer Station zu einer anderen. Für einen solchen oder ähnlichen Fall können Bedingungen, denen eine Erzeugniseinheit ausgesetzt ist, und/oder Statusänderungen einer Erzeugniseinheit beispielsweise auf die folgende Art und Weise erfasst und an die Datenbank übermittelt werden: eine oder mehrere Erzeugniseinheiten, die auf einen Transport geschickt werden und/oder einem Prozess unterzogen werden, werden von einem Computersystem erfasst. Während des Transports/Prozesses erfassen ein oder mehrere Sensoren eine oder mehrere Bedingungen, denen die eine oder mehreren Erzeugniseinheiten ausgesetzt sind, und/oder sie erfassen Statusänderungen zu der einen oder den mehreren Erzeugniseinheiten. Die von dem einen Sensor oder den mehreren Sensoren erfassten Daten können entweder über ein Mobilfunknetz und ggf. weitere Netzwerke an die Datenbank übermittelt werden. Sie können aber auch in einem mobilen Datenspeicher gespeichert werden, um sie dann zu einem späteren Zeitpunkt (z.B. nach Erreichen einer weiteren Station in der Lieferkette) über ein oder mehrere Netzwerke an die Datenbank zu übermitteln. Es ist denkbar, dass mehrere Erzeugniseinheiten, die gemeinsam transportiert und/oder prozessiert werden, auch auf virtueller Ebene verknüpft werden. Hierzu bietet sich beispielsweise eine hierarchische Strukturierung auf Basis von Verpackungs- und/oder Behältereinheiten und/oder logischen Einheiten an, wie sie in WO2018019720A1 beschrieben ist.

Es ist denkbar, dass Informationen entlang der Lieferkette in Form einer Blockchain in der Datenbank gespeichert werden. Auf diese Weise kann beispielsweise eine spätere Manipulation von Informationen erschwert oder sogar verhindert werden. Zum Aufbau einer Blockchain und der Speicherung von Daten in Form einer Blockchain sei auf die Vielzahl an Publikationen zu diesem Thema verwiesen (siehe z.B.: WO2019/168795, EP3335367, WO2019/165126, J. Hinckeldeyn: Blockchain-Technologie in der Supply Chain, Springer 2019, ISBN: 978-3-658-26439-0).

Auf ihrem Weg entlang der Lieferkette erreichen Erzeugniseinheiten irgendwann einen Verbraucher. Der Verbraucher hat nun die Möglichkeit, einige oder alle der entlang der Lieferkette gesammelten und in der Datenbank gespeicherten Informationen abzurufen. Dies geschieht durch Erfassen der individuellen Kennung auf/an/in der Erzeugniseinheit. Die Informationen sind in der Datenbank unter der individuellen Kennung gespeichert. Zugang zu der Datenbank kann der Verbraucher z.B. über ein Webportal oder eine Softwareapplikation (App) erhalten. Der Verbraucher kann sein Smartphone, Tablet-Computer oder dergleichen verwenden, um Zugang über ein Netzwerk (z.B. Mobilfunknetz, Internet) zur Datenbank zu erhalten. Das Auslesen (Erfassen) der individuellen Kennung kann mit einer Kamera oder einem anderen Sensor, der Bestandteil des Smartphones/Computers des Verbrauchers sein kann oder mit diesem verbunden sein kann, erfolgen.

Denkbar ist auch, dass an dem Verkaufsort für die Erzeugniseinheit ein Terminal (Kiosksystem) installiert ist, das ein Verbraucher zum Erfassen der individuellen Kennung und zum Zugang zu der Datenbank verwenden kann.

Es kann sein, dass sich ein Verbraucher zunächst an seinem Computer und/oder an dem Terminal identifizieren muss, bevor er Zugang zu den in der Datenbank gespeicherten Informationen erhält. Die Identifikation kann nach den bekannten Verfahren zum Beispiel über einen Zugangscode, einen Nutzernamen inkl. Kennwort, einen Token, eine ID-Karte, mit einem NFC-Chip seines Smartphones und/oder dergleichen erfolgen. Es ist denkbar, dass ein Zugangsrechtekonzept regelt, welche Art von Nutzer und/oder Verbraucher welche Art von Informationen erhält.

Informationen können auf einem Bildschirm angezeigt, auf einem Drucker ausgegeben und/oder über einen Lautsprecher ausgegeben werden. Auch der Versand einer E-Mail oder einer SMS oder einer vergleichbaren Mitteilung mit den entsprechenden Informationen an den Verbraucher ist denkbar.

Der Verbraucher kann die Informationen für einen Kaufentscheid verwenden, für eine weitere Prozessierung der Erzeugniseinheit einsetzen oder auf eine sonstige Weise nutzen.

Das erfindungsgemäße System ist so ausgelegt, dass es Anfragen von einer Vielzahl an Verbrauchern empfangen kann. In einer bevorzugten Ausführungsform umfasst das erfindungsgemäße System eine Vielzahl an Erfassungseinheiten, mit denen Verbraucher individuelle Kennungen auf Erzeugniseinheiten lesen können. Die Erfassungseinheiten verfügen über Mittel zum Übermitteln der individuellen Kennungen an den Server. Dies kann beispielsweise über eine oder mehrere Netzwerke (z.B. Mobilfunknetz, Internet) erfolgen.

Die Erfindung wird nachfolgend anhand von Figuren näher erläutert, ohne die Erfindung auf die in den Zeichnungen gezeigten Merkmale und Merkmalskombinationen beschränken zu wollen.

Es zeigen:

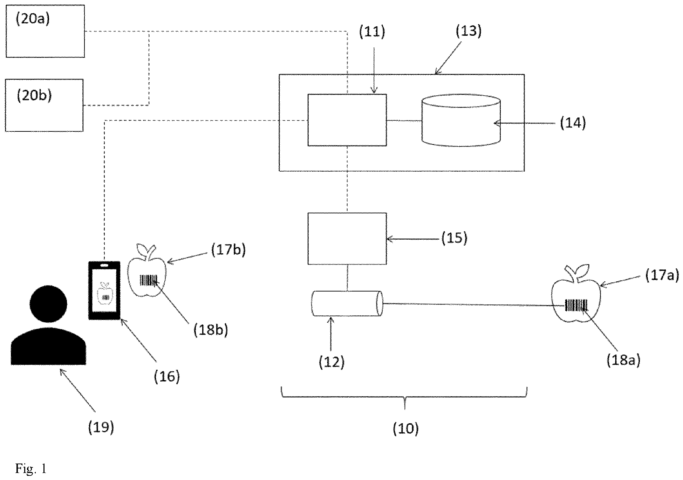

Fig. 1 zeigt beispielhaft und schematisch eine Ausführungsform des erfindungsgemäßen Systems. Das System (10) umfasst eine Kontrolleinheit (11), eine Beschriftungseinheit (12) mit einer Steuereinheit (15), und einen Server (13) mit einer Datenbank (14).

Im vorliegenden Beispiel ist die Kontrolleinheit (11) Bestandteil des Servers (13). Mit der Kontrolleinheit (13) werden für eine Vielzahl an pflanzlichen und/oder tierischen Erzeugniseinheiten (17a, 17b) individuelle Kennungen (18a, 18b) erzeugt und verwaltet.

Die Beschriftungseinheit (12) wird über die Steuereinheit (15) gesteuert und versieht die pflanzlichen und/oder tierischen Erzeugniseinheiten (17a) mit individuellen Kennungen (18a). Die Steuereinheit (15) ist über ein Netzwerk oder mehrere Netzwerke mit der Kontrolleinheit (11) verbunden (dargestellt durch die gestrichelte Linie) und bezieht von der Kontrolleinheit (11) (direkt oder über einen oder mehrere Computersysteme) die individuellen Kennungen (18a).

Entlang der Lieferkette durchläuft eine Erzeugniseinheit (17a, 17b) eine Vielzahl an Stationen (20a, 20b), an denen sie prozessiert wird. Informationen zu den Stationen (20a, 20b) und/oder den Prozessen, denen die Erzeugniseinheit ausgesetzt ist, können über ein oder mehrere Netzwerke an den Server (13) übermittelt werden, wo sie in der Datenbank (14) unter der jeweiligen individuellen Kennung (18a, 18b) abgelegt werden.

Ein Verbraucher (19) kann mit einer Erfassungseinheit (16), die z.B. eine Kamera als Sensor umfasst, die individuelle Kennung (18b) auf/an/in einer Erzeugniseinheit (17b) auslesen. Im vorliegenden Fall ist die Erfassungseinheit (16) als ein Smartphone oder ein Tabletcomputer ausgeführt. Die ausgelesene individuelle Kennung (18b) wird über ein oder mehrere Netzwerke an den Server (13) übermittelt. Der Server (13) ist konfiguriert, anhand der übermittelten individuellen Kennung (18b) aus der Datenbank (14) Informationen zu der Erzeugniseinheit (17b) zu ermitteln und diese über das Netzwerk oder die Netzwerke an die Erfassungseinheit (16) des Verbrauchers (19) zu übermitteln. Über die Erfassungseinheit (16) des Verbrauches (19) können die Informationen gegenüber dem Verbraucher (19) ausgegeben werden.

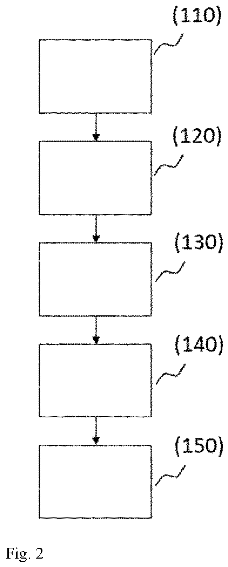

Fig. 2 zeigt beispielhaft und schematisch in Form eines Ablaufdiagramms die Schritte, die ein Computer ausführt oder mehrere Computer ausführen, wenn das erfindungsgemäße Computerprogramm in seinen/ihre Arbeitsspeicher geladen ist und ausgeführt wird. Bei dem Computer kann es sich um den Server und/oder die Kontrolleinheit handeln. Die Schritte sind:
(110) Erzeugen einer eindeutigen Kennung für eine pflanzliche oder tierische Erzeugniseinheit
(120) Empfangen von Informationen zu der Erzeugniseinheit und Speichern der Informationen in einer Datenbank unter der individuellen Kennung
(130) Empfangen der individuellen Kennung durch einen Verbraucher
(140) Extrahieren von Informationen zu der Erzeugniseinheit aus der Datenbank anhand der empfangenen individuellen Kennung
(150) Übermitteln der extrahierten Informationen an den Verbraucher.

## Patentansprüche

1. System umfassend
- eine Kontrolleinheit, wobei die Kontrolleinheit konfiguriert ist, für eine Vielzahl an pflanzlichen und/oder tierischen Erzeugniseinheiten jeweils eine individuelle Kennung zu erzeugen,
- eine Beschriftungseinheit, wobei die Beschriftungseinheit konfiguriert ist, pflanzliche und/oder tierische Erzeugniseinheiten mit jeweils einer individuellen Kennung zu versehen, wobei die individuellen Kennungen in Form von maschinell lesbaren Codes auf die Erzeugniseinheiten aufgebracht werden,
- einen Server, wobei der Server konfiguriert ist, von einer Vielzahl an Verbrauchern individuelle Kennungen zu empfangen, anhand der individuellen Kennungen Informationen zu den jeweiligen Erzeugniseinheiten aus einer Datenbank zu extrahieren und die Informationen an die Verbraucher zu übermitteln.

2. System gemäß Anspruch 1 ferner umfassend eine Vielzahl an Erfassungseinheiten, wobei jede Erfassungseinheit über einen Sensor zum Auslesen von individuellen Kennungen verfügt, wobei jede Erfassungseinheit konfiguriert ist, ausgelesene Kennungen an den Server zu senden und von dem Server Informationen zu den Erzeugniseinheiten zu empfangen und diese anzuzeigen.

3. System gemäß einem der Ansprüche 1 oder 2, wobei es sich bei den maschinenlesbaren Codes um Strichcodes oder Matrixcodes handelt.

4. System gemäß einem der Ansprüche 1 bis 3, wobei es sich bei den Erzeugniseinheiten um Früchte oder Gemüse handelt.

5. System gemäß einem der Ansprüche 1 bis 4, wobei die individuellen Kennungen mittels Laser in die Oberfläche der unverpackten Erzeugniseinheiten eingebracht sind.

6. System gemäß einem der Ansprüche 1 bis 5, wobei die individuellen Kennungen jeweils mit einer Laufzeit versehen sind, wobei eine individuelle Kennung nach Ablauf ihrer Laufzeit einer anderen Erzeugniseinheit zugeordnet wird und die andere Erzeugniseinheit mit der individuellen Kennung versehen wird.

7. System gemäß einem der Ansprüche 1 bis 6, wobei die Informationen zu den Erzeugniseinheiten ausgewählt sind aus der Liste:
- Art der Erzeugniseinheit,
- Herkunft der Erzeugniseinheit,
- Ernte- oder Schlachtdatum,
- Datum der Aussaat,
- Informationen zur Erzeugung oder Art der Haltung bei Tieren,
- Informationen zur Verwendung von Pflanzenschutzmitteln,
- Gewicht und/oder Größe,
- Zeitspannen, in denen die Erzeugniseinheit gelagert und/oder transportiert worden ist,
- Bedingungen, unter denen die Erzeugniseinheit gelagert und/oder transportiert worden ist,
- Stationen in der Lieferkette,
- Mindesthaltbarkeit und/oder
- Informationen zur Lagerung und/oder zur Zubereitung und/oder zum sonstigen Gebrauch durch den Verbraucher.

8. System gemäß einem der Ansprüche 1 bis 7, **dadurch gekennzeichnet, dass** die Informationen zu den Erzeugniseinheiten in einer Blockchain gespeichert sind, wobei Blöcke in einer Blockchain Stationen repräsentieren, die eine oder mehrere Erzeugniseinheiten durchlaufen hat/haben und/oder Prozesse repräsentieren, denen eine oder mehrere Erzeugniseinheiten unterworfen waren.

9. Verfahren umfassend die Schritte
- Versehen einer pflanzlichen oder tierischen Erzeugniseinheit mit einer individuellen Kennung, wobei die individuelle Kennung in Form eines maschinell lesbaren Codes auf die Erzeugniseinheit aufgebracht wird,
- Sammeln von Informationen zu der Erzeugniseinheit und Speichern der Informationen in einer Datenbank unter der individuellen Kennung
- Empfangen der individuellen Kennung durch einen Verbraucher
- Extrahieren von Informationen zu der Erzeugniseinheit aus der Datenbank anhand der empfangenen individuellen Kennung
- Übermitteln der extrahierten Informationen an den Verbraucher.

10. Computerprogrammprodukt umfassend einen Datenträger, auf dem ein Computerprogramm gespeichert ist, wobei das Computerprogramm in einen Arbeitsspeicher eines Computers geladen werden kann und dort den Computer dazu veranlasst, folgende Schritte ausführen:
- Erzeugen einer eindeutigen Kennung für eine pflanzliche oder tierische Erzeugniseinheit
- Empfangen von Informationen zu der Erzeugniseinheit und Speichern der Informationen in einer Datenbank unter der individuellen Kennung
- Empfangen der individuellen Kennung durch einen Verbraucher
- Extrahieren von Informationen zu der Erzeugniseinheit aus der Datenbank anhand der empfangenen individuellen Kennung
- Übermitteln der extrahierten Informationen an den Verbraucher.
